# EUROPEAN PATENT SPECIFICATION

(11) **EP 3 477 817 B1**
(45) Date of publication and mention of the grant of the patent: **01.07.2020**
(21) Application number: 17198374.5
(22) Date of filing: 25.10.2017
(51) Int. Cl.: H02J 50/40, H02J 50/80, B61L 25/04

(54) **METHOD AND APPARATUS FOR SIMULTANEOUS WIRELESS INFORMATION AND POWER TRANSFER**
VERFAHREN UND VORRICHTUNG ZUR SIMULTANEN DRAHTLOSEN ÜBERTRAGUNG VON KOMMUNIKATION UND STROM
PROCÉDÉ ET APPAREIL POUR TRANSFERT D'INFORMATIONS ET DE PUISSANCE SANS FIL

(43) Date of publication of application: 01.05.2019
(73) Proprietor: Vestel Elektronik Sanayi ve Ticaret A.S., 45030 Manisa (TR); Ozyegin Universitesi, 34794 Istanbul (TR)
(72) Inventor: GULBAHAR, Burhan, 45030 Manisa (TR); MEMISOGLU, Gorkem, 45030 Manisa (TR)
(74) Representative: Flint, Adam

(56) References cited:
- EP-A1- 3 093 051
- EP-A1- 3 165 868
- WO-A1-2017/154249
- US-A1- 2013 193 276
- US-B2- 9 428 203

## Description

### Technical Field

The present disclosure relates to a method and apparatus for simultaneous wireless information and power transfer.

### Background

Wireless communications is a growing field of interest with an ever growing consumer interest in higher data speeds and greater reliability. Wireless data communications allows wireless networking between, for example, desktop computers, laptops, tablet computers, cellular or mobile phones and other related devices.

It is has been suggested that while transferring data wirelessly, power can also been harvested simultaneously. In particular, it has been suggested that power can be harvested using long range communications such as, for example, RF communications and short range communications such as, for example, near-field communications.

US2013/193276A1 discloses systems and methods for accurate determination of vehicle position based on position information derived from inductive power received and acceleration of the vehicle. The systems and methods estimate vehicle position with GPS and/or RFID readings of tags external to the vehicle. These estimates may be used to identify faults in vehicle position measurement, update the determined vehicle position, and correct acceleration estimates.

EP3165868A1 discloses a method, apparatus and system for networking accessories to a firearm or weapon wherein the accessories are inductively powered from the rail and data is transferred between the accessories and the rail via inductive coupling.

### Summary

According to a first aspect disclosed herein, there is provided an apparatus for transmitting simultaneously and wirelessly information and power from a first device as the first device moves, according to claim 1.

In an example, the apparatus comprises a plurality of sets of first coils for fitting to a said first device.

The longitudinal axes of the coils in the set of first coils may for example be parallel to each other.

In an example, the apparatus comprises a velocity estimator configured to obtain a measure of a velocity of the set of first coils relative to a said set of second coils and provide the measure of the velocity to the controller.

The controller may be configured, for example, to utilize the measure of velocity to control the selective powering of the coils in the set of first coils in order to enable transmission of information to a said set of second coils.

In an example, all of the coils in the set of first coils have magnetic cores.

In an example, a vehicle comprises the apparatus.

According to a second aspect disclosed herein, there is provided a method for transmitting simultaneously and wirelessly information and power from a first device to a second device as the first device moves relative to the second device, according to claim 9

In an example, the method comprises controlling the transmission of information to the set of second coils based on the relative velocity between the set of first coils and the set of second coils.

The first device may be for example be a vehicle and the set of second coils may be for example fitted adjacent to a track, and the vehicle moves along the track.

The longitudinal axes of the coils in the set of first coils may be for example parallel to the coils in the set of second coils.

In an example, the apparatus comprises
measurement circuitry configured to measure the voltage induced in the set of first coils as the second device moves relative to the first device;
power harvesting circuitry configured to harvest energy in the set of first coils; and
a demodulator configured to demodulate the measured voltages in the set of first coils as the second device moves relative to the first device and switches for each coil in the set of second coils are open and closed so that the second coils act as either an open circuit or closed circuit and thereby allow each coil in the set of second coils to be selectively powered, by induction from the power induced in the set of first coils, and to output a demodulated symbol.

In an example the method comprises
measuring the induced voltage in the set of first coils as the second device moves in relation to the first device;
harvesting energy in the set of first coils; and
demodulating the measured voltages in the set of first coils as the second device moves relative to the first device and switches for each of the coils in the set of second coils are open and closed so that the second coils act as either an open circuit or closed circuit and thereby allow each coil in the set of second coils to be selectively powered, by induction from the power induced in the set of first coils, to output a demodulated symbol.

In an example, the method comprises measuring the relative velocity between the second device and first device and utilizing the measured velocity to control the selective powering of the coils in the set of first coils in order to enable transmission of information to the set of second coils.

The first device may for example be a track and the set of second coils may be for example fitted to a vehicle, and the vehicle moves along the track.

### Brief Description of the Drawings

To assist understanding of the present disclosure and to show how embodiments may be put into effect, reference is made by way of example to the accompanying drawings in which:
Figure 1 shows schematically an example of a set of first coils and a set of second coils, each coil having a magnetic core;
Figure 2 shows schematically an example of a modulation scheme used in embodiments of the present disclosure in order to transmit symbols;
Figure 3 shows schematically an example of a series of transmitters and receivers fitted to a railway carriage and a railway track according to embodiments of the present disclosure; and
Figure 4 shows schematic block diagrams of examples of a transmitter and a receiver according to embodiments of the present disclosure.

### Detailed Description

As mentioned, wireless communications is a growing field of interest. There is for example an ever growing consumer interest in higher data speeds and greater reliability. Wireless data communications allows wireless networking between, for example, desktop computers, laptops, tablet computers, cellular or mobile phones and other related devices. Available technologies differ in local availability, coverage range and performance.

It is has been suggested that while transferring data wirelessly, power can also been harvested simultaneously. In some prior proposals, it has been suggested that power can be harvested using long range communications such as, for example, RF (radio frequency) communications or short range communication such as, for example, near-field communications. Harvesting energy is particularly useful for charging batteries in portable devices such as, for example, mobile phones and tablets. Energy harvesting can also be useful when access to a mains power source is limited.

Wireless communications for high-speed trains and other fast moving vehicles present particular problems. For example, current RF solutions for wireless communications on high-speed vehicles suffer from various problems such as, for example, non-stationary small-scale fading, large Doppler spreads and high penetration losses. For communications on trains, Long Term Evolution Railway (LTE-R) utilises mobile units inside the trains and the track for connection to base stations. This standard for railway communications was introduced to replace Global System for Mobile Communications - Railway (GSM-R) in order to improve performance. However, problems with LTE-R still remain. RF communications at high speed means fast changing channels resulting in a high signalling overhead which can waste radio resources. Furthermore, as trains move rapidly between cell coverage zones, this increases the number of cell handovers, and thus increases the probability of handover failure. Moreover, with high speed trains (for example trains moving in excess of say 250km/h), the cell handover process may not even be completed in time before the train has moved to the next cell. In addition, with many cell phone users on the train and with frequent handovers between cells, the signalling traffic on the cellular network for the handovers presents a high overhead for the cellular networks.

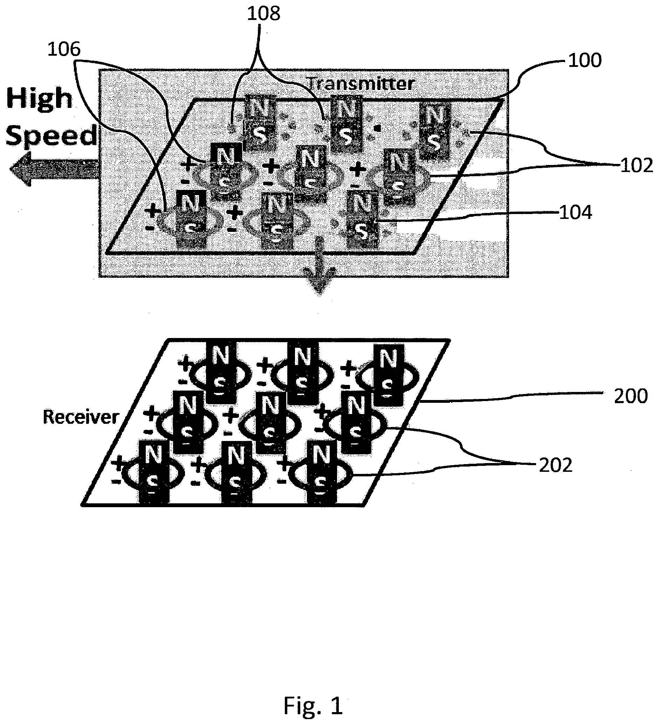

Referring now to the drawings, Figure 1 schematically shows a set 100 of first coils 102 and a set 200 of second coils 202. The longitudinal axes of the coils 102, 202 are parallel to each other. Each coil 102, 202 in each set 100, 200 is shown to have a magnetic core 104. Each magnetic core 104 may be, for example, formed of a ferromagnetic material, such as iron, etc., and may be a permanent magnet. Each magnetic core 104 may be for example in the form of a bar magnet. The magnetic cores 104 may have their north/south poles aligned with the longitudinal axes of the coils 102, 202. Even though Figure 1 shows that all of the coils 102, 202 have magnetic cores 104, this is shown as an example only and in some embodiments only some of the coils 102, 202 may have magnetic cores.

In the example of Figure 1, each set 100 of first coils 102 is in the form of a square arrangement of 3x3 coils 102. In other examples, there may be a different number of coils 102 and the coils 102 may be arranged in different geometric arrangements. The second set 200 of second coils 202 is similarly arranged.

The set 100 of first coils 102 may function as a transmitter in this schematic example. The set 200 of second coils 202 may function as a receiver in this schematic example. It is noted that in some examples both the set 100 of first coils 102 and the set 200 of second coils 202 may function as a transmitter and a receiver, i.e. the sets 100, 200 are effectively transceivers, with the transmitting and receiving being carried out alternately in a time division manner.

A relative movement between the set 100 of first coils 102 and the set 200 of second coils 202 enables transmission of power and/or information simultaneously by inducing a voltage in the set 200 of second coils 202 through electromagnetic induction. The voltage induced in the coils 202 of the receiver is due to the relative movement between the magnetic cores 104 in the transmitter and the coils 202 in the receiver. The induced voltage in the coils 202 of the receiver in turn induces a voltage in the first coils 102 in the transmitter through magnetic induction. Moreover, to transmit information from the first set 100 to the second set 200, individual ones of the coils 102 of the first set 100 are selectively powered. (Likewise, to transmit information from the second set 200 to the first set 100, individual ones of the coils 202 of the first set 200 are selectively powered.) In particular, in the set 100 of first coils 102, Figure 1 shows five coils that have been selectively powered on, which is represented by a circle 106 around a magnetic core 104, while four coils have been selectively powered off, which is represented by a dashed circle 108 around a magnetic core 104. As the set 100 of first coils 102 is moved in relation to the set 200 of second coils 202 this effectively enables transmission of a symbol to the set 200 of second coils 202. (A discussion of transmission of symbols relying on the topology and selective powering of the coils will be given below.) Accordingly, both data and energy are transmitted simultaneously.

The coils 102 which are to be selectively powered may be controlled by a controller (not shown in Figure 1). The controller functions to open and close switches for the coils 102 which can control the coils 102 to act as either an open circuit (powered off) or closed circuit (powered on). The controller may be configured to receive a measure of relative velocity between the set 100 of first coils 102 and the set 200 of second coils 202. The controller may be further configured to utilize the measure of velocity to control the selective powering of the coils 102 in the set 100 of first coils 102 in order to enable transmission of information to the set 200 of second coils 202. If a coil 102 is acting as an open circuit then no current will be able to flow through the coil 102. The arrangement of which coils 102 are selectively powered either on or off 106, 108 allows for a symbol to be transmitted to the set 200 of second coils 202 as the sets 100, 200 of coils move relative to one another.

In the set 100 of first coils 102, if one of the coils 102 has been selectively powered on 106, then as that powered coil 102 moves in relation to the corresponding coil in the set 200 of second coils 202, then this will induce a voltage in that corresponding coil 202 in the set 200 of second coils 202. The induced voltage in the corresponding coil 202 in the set 200 of second coils 202 will be effected if the coil 102 in the set 100 of first coils 102 has been selectively powered on 106. The magnetic core 104 of the powered coil 106 assists in concentrating the magnetic field produced by the powered coil 106.

The coils 102 that have been selectively powered off 108 (by for example opening switches in the circuits to the coils 102) will act as an open circuit. The coils 102 that have been selectively powered on 106 in the set 100 of first coils 102 do not utilise an external power source. Instead the voltage in the powered coils 102 is induced by the alternating current in the coils 202 which was induced by the movement of the magnetic cores 104. Therefore, the set 100 of first coils 102 and the set 200 of second coils 202 do not require an external power source. The coils 102, 202 are powered by electromagnetic induction as the two sets of coils with magnetic cores move relative to one another. The kinetic energy of the moving magnetic cores 104 is converted to electrical energy to power the coils 202 in the receiver (Faradays law) and the coils 202 in the receiver power the coils 102 in the transmitter due to mutual inductance. In contrast, in for example LTE-R communications and other prior proposals, an external power source is required for both the mobile units on the trains and the base stations to which they are connected.

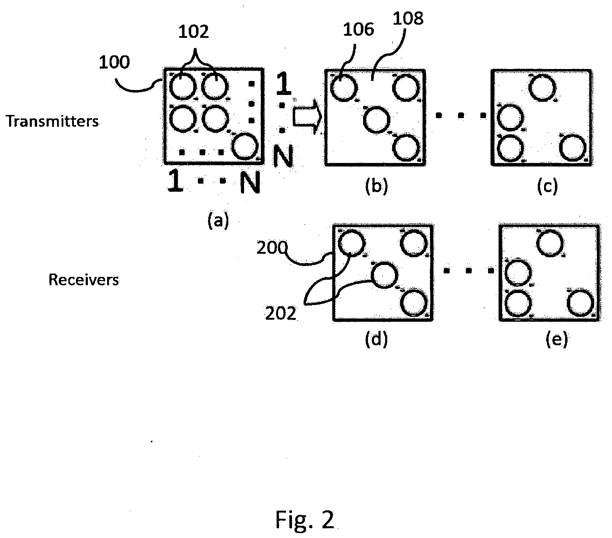

Figure 2a gives a schematic representation of a set 100 of coils 102 in which the dimensions of the set of coils runs from 1 to N in the 'X' direction and 1 to N in the 'Y' direction. In this example the set 100 of coils 102 is shown as an organised square set. However, this is an example only and the set 100 of coils 102 could be organised in different ways, for example, a rectangular arrangement or a circular arrangement, a three dimensional arrangement, etc., and with different numbers of coils 102. In Figure 2 each coil 102 is represented by a circle. If the circle is dark in Figure 2, this represents that the coil is powered on 106. If the circle is lighted out (invisible) in Figure 2, this represents that the coil is powered off 108. Each of the coils 102 may have a magnetic core 104.

The pattern of which coils 102 are powered 106 and which coils are not powered 108 maps to a different symbol to be transmitted. Figure 2b shows a set 100 of coils 102 with four powered coils 106 and five coils without power 108. This combination of coils 102 with power and coils 102 without power corresponds to a unique symbol to be transmitted. The example coil arrangement shown in Figure 2b may act as a transmitter. The example coil arrangement shown in Figure 2d may act as a receiver. As the coil arrangement shown in Figure 2b moves in relation to a set 200 of coils 202 shown in Figure 2d this induces a voltage in the corresponding coils 202 in Figure 2d. If a coil 102 is powered in the transmitter then this will power the correspondingly located coil 202 in the corresponding receiver. In the example shown, Figure 2b and Figure 2d form a transmitter-receiver pair. The symbol is transmitted from the transmitter, Figure 2b, to the receiver, Figure 2d.

A different arrangement of powered coils is shown in the Figure 2c. In Figure 2c there are four powered coils 106 and five coils without power 108 but it corresponds to a different symbol compared to Figure 2b due to the alternative arrangement of powered coils 106 and unpowered coils 108. In the example shown, Figure 2c and Figure 2e form a transmitter-receiver pair. The symbol is transmitted from the transmitter, Figure 2c, to the receiver, Figure 2e.

Therefore, the coils 102 in the set 100 of coils that are powered or unpowered are changed at any particular time in order to transmit different symbols and therefore information.

In the examples shown in Figures 2a-2c, a set 100 of coils 102 has 3x3 coils 102, with nine per set 100. This corresponds to 2⁹/4 = 128 different coil combinations. Thus, a 3x3 set 100 of coils 102 can transmit 128 different symbols. In other examples, there may be a different number of coils 102 and the coils 102 may be arranged in different geometric arrangements.

A topology modulation scheme suitable for use with examples of apparatus described herein is described in further detail in "Network Topology Modulation for Energy and Data Transmission in Internet of Magneto-Inductive Things," Proc. of The IEEE GLOBECOM 2016 First International Workshop on the Internet of Everything (IoE), Washington D.C., USA, December 2016, by B. Gulbahar.

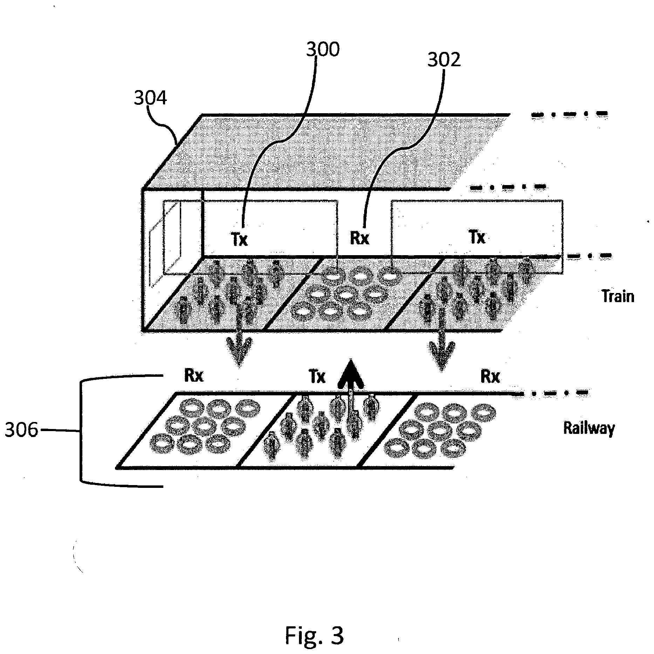

Figure 3 schematically shows an example of a series of transmitters 300 and receivers 302 fitted to a railway carriage 304 and a railway track 306 (i.e. in an example between the rails of the track 306 such that they are under the carriage 304 as the carriage 304 moves along the track 306). The transmitters 300 and receivers 302 all function as transceivers 300, 302 but at the moment in time shown in Figure 3, the 1^{st} and 3^{rd} transmitter 300 fitted to the railway carriage 304 are functioning as transmitters at that point in time while the 2^{nd} transceiver is functioning as receiver 302. At the next time instant, when the symbol to be transmitted is changed, the transmitters 300 will start to function as receivers 302 and vice versa.

Each transmitter is shown to comprise a set 100 of first coils 102, in which each coil 102 has a magnetic core 104. In other examples, the number of coils 102 in each set may differ and some coils 102 may not have a magnetic core 104.

Each receiver 302 is shown to comprise a set 200 of second coils 202. The magnetic cores 104 are only shown in the transmitters 300, even though they are actually present in all of the transceivers 300, 302, as the function of the magnetic core 104 is to induce a current in the coils 202 of the receiver. It is the alternating current induced in the coils 202 of the receiver 302 which induces a voltage in the coils 102 of the transmitter 300 due to mutual inductance. Therefore, while the transceiver 300, 302 is functioning as a receiver 302 the magnetic core 104 is not used to induce a voltage. Thus, in this example, for simplicity the coils 202 are shown not to have magnetic cores 104.

As the railway carriage 304 travels along the railway track 306 the movement of the magnetic cores 104 within each transmitter 300 relative to the receiver 302 will induce a voltage in the coils 202 in the receiver 302. As explained previously the selective powering of the coils 102 in each transmitter 300 will correspond to a different symbol to be transmitted to the receiver 302.

Figure 3 shows that as the railway carriage 304 moves along the railway track 306 information is both transmitted to and from the railway carriage 304. It is noted that even though the example shown is of a railway carriage 304 travelling along a track 306 other vehicles moving along a track/road would also be appropriate. Furthermore, the amount of sets of coils and the size of the sets of coils is shown as an example only and may vary.

As an example only, a series of railway carriages 304, from now on referred to as a train, may have a length of 111 metres and may travel along the railway track at 400 km/h. Therefore, the train will travel 111 metres every second (the train's length). Assume that a plurality of sets 100, 200 of coils 102, 202 are equally distributed throughout the train's length. Each set 100, 200 of coils 102, 202 may have dimensions of 3x3 coils 102, 202. Assume there is a total of N sets of coils on the train/track. Thus, per second, N sets 100 of transmitter coils 102 pass on top of each set 200 of receiver coils 202 on the railway track through the length of the track/train. The passage period equals to 1/N and the frequency of the induced current in the coils is N Hz.

If each set 100, 200 of coils 102, 202 changes the network topology symbol at N Hz, then each coil 102, 202 on the track/train achieves to transmit a magneto inductive topology symbol to each one of N sets 100, 200 under the track/train while the track/train moves. As the topology symbol changes in each set 100, 200 of coils 102, 202, it encounters another set 100, 200 of coils 102, 202 on the railway track 306. It is assumed that each receiver 302 on the railway track gets a symbol from each different set 100 of transmitter coils 102 on the train. Thus, each channel transmits N² symbols each second, by utilizing all the coils on the track/train. The same calculation is valid for the reverse channel, i.e., from the railway track 306 to the train 304 as well. Thus, a channel can transmit N² symbols/second. If the coil structure from Figures 1 or 2 is utilized with a set of coils sized approximately 6 cm in width per 3 x 3 coil set. Then N becomes 111 meters / 6 cm = 11100 sets 100, 200 of coils 102, 202. Therefore a 123 MHz data rate is possible per channel, due to N²=11100². If these sets of coils are placed along the width of the track/train, and assume that the track/train width is 3.7 meters, then 3.7 meter / 6 cm = 61 independent parallel channels which can be formed, each having a 123 MHz data rate. However, if the size of the coils 102, 202 is reduced then the number a parallel channels could be increased. Parallel channels of sets 100, 200 of coils 102, 202 can be placed along the track/train with only a small amount of interference between each parallel set 100, 200. Thus, the peak data rate reaches 61 x 123 MHz = 7.5 GHz. Thus, per second, 7.5 x 10⁹ topology symbols can be transmitted either as uplink or downlink. As described earlier if a set of coils 102, 202 has coil dimensions of 3 x 3 coils, this allows 128 different combinations of coils in a 3 x 3 coil block. This allows almost a 50 Gbit/s data rate communications for either downlink or uplink.

This numerical explanation is given as an example only to aid understanding of the present disclosure. All speeds, lengths, frequencies and coil arrangements are not fixed and can vary. As can be seen from the equations the speed of data transfer is proportional to the speed of the train moving on the track.

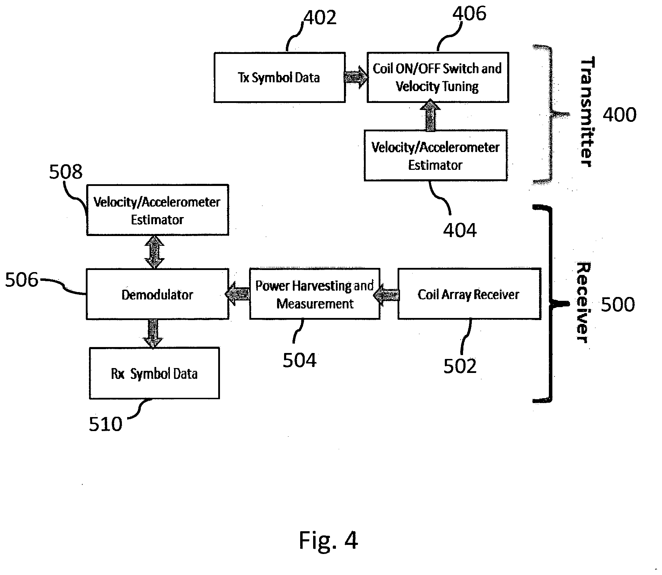

Figure 4 shows a block diagram of a transmitter 400 and a block diagram of a receiver 500 as proposed in embodiments of the present disclosure.

The transmitter 400, as shown in Figure 4, comprises symbol data 402 to be transmitted to the receiver 500, a velocity estimator 404 and a controller 406 to selectively power the coils 102, 202 on or off. The velocity estimator is configured to determine a measure of velocity of the railway carriages 304 as they travel along the railway track 306. As an example only, the velocity may be measured using the frequency of the induced current in the receiver coils. As another example, the velocity may be taken from an internal speedometer used by the vehicle that the transmitter 400 or receiver 500 is fitted to.

The measure of velocity and symbol data is directed to the controller 406. The controller 406 is configured to enable the coils to be selectively powered in the transmitter 400. The controller can switch the coils between an open circuit and a closed circuit, in order to enable them to be powered on or off. Using the symbol data and the measure of velocity the controller 406 can control the powering of the coils in order to transmit the necessary symbol data 402 to the receiver 500.

As described earlier, the measure of velocity is required in order to synchronise the powering of the coils in the transmitter 400 to transmit the correct symbols to the receivers 500. As one set of transmitter coils 102 moves over one set of receiver coils 202 the topology of the coils 102 being powered should change in order to transmit a different symbol. In order for this synchronisation to take place, a measure of velocity is required. The frequency at which the controller changes the powering of the coils (topology) is dependent on the measure of velocity. If the velocity is higher, the frequency at which the topology is changed will also be higher.

The receiver 500, as shown in Figure 4, comprises a set of coils 502, power harvesting and measurement apparatus 504, a demodulator 506, a velocity estimator 508 and an output of symbol data 510.

A voltage will be induced in each of the coils from the set 502 as the transmitter 400 moves in relation to the receiver 500. The voltage is induced due to electromagnetic induction from the magnetic cores and coils. The voltage induced in the coils of the receiver 500 will vary dependent on which coils are powered on in the coils of the transmitter 400.

The power harvesting and measurement apparatus 504 will measure the received voltage/power in each of coils in each set of coils 502. The measurements of voltage/power made in each coil will vary in frequency dependent on the relative velocity between the transmitter 400 and receiver 500. If the symbols being transmitted are being changed at a frequency of, for example, 123 MHz, then a measurement will be taken every 1/123 x 10⁹ seconds. After the measurement, the power will be harvested from the receiver coils. The harvested power could be, for example, stored.

The demodulator 506 is configured to decode the measured voltages/powers in the coils in order to find the topology symbols that were initially transmitted to the receiver 500. As with the measurement step, if the symbols being transmitted are being changed at a frequency of, for example, 123 MHz, then demodulation of the measured data will need to take place every 1/123 x 10⁹ seconds to decode the individual symbols. Once the data has been successfully demodulated the received symbol data is output 510. The velocity estimator 508 in the receiver 500 is used for timing, to switch the receiver 500 to a transmitter 400.

Thus, the present disclosure can be used for high-speed communications for vehicles such as, for example, trains and cars. It also allows for harvesting energy from passive communications using simultaneous wireless information and power transfer (SWIPT).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An apparatus for transmitting, simultaneously and wirelessly, information and power from a first device as the first device moves relative to a second device, the apparatus comprising:
a set of first coils (100) for fitting to a said first device for interacting with a set of second coils (200) for fitting to a said second device, at least some of the coils in the set of first coils (100) having magnetic cores (104) to enable power transfer to a said set of second coils (200) by magnetic induction through relative movement of the magnetic cores (104) of the set of first coils (100) with respect to a said set of second coils (200); and
a controller configured to open and close switches for each coil in the set of first coils (100) so that the first coils (100) act as either an open circuit or closed circuit and thereby allow each coil in the set of first coils (100) to be selectively powered, in order to enable transmission of information to a said set of second coils (200) by induction from the power induced in a said set of second coils (200) as the set of selectively powered first coils (100) move relative to a said set of second coils (200).

2. An apparatus according to claim 1, comprising:
a plurality of sets of first coils (100) for fitting to a said first device.

3. An apparatus according to claim 1 or claim 2, wherein the longitudinal axes of the coils in the set of first coils (100) are parallel to each other.

4. An apparatus according to any of claims 1 to 3, comprising a velocity estimator configured to obtain a measure of a velocity of the set of first coils (100) relative to a said set of second coils (200) and provide the measure of the velocity to the controller.

5. An apparatus according to claim 4, wherein the controller is configured to utilize the measure of velocity to control the selective powering of the coils in the set of first coils (100) in order to enable transmission of information to a said set of second coils (200).

6. An apparatus according to any of claims 1 to 5, wherein all of the coils in the set of first coils (100) have magnetic cores (104).

7. An apparatus according to any of claims 1 to 6, comprising:
measurement circuitry configured to measure the voltage induced in the set of first coils (100) as a said second device moves relative to a said first device;
power harvesting circuitry configured to harvest energy in the set of first coils (100); and
a demodulator configured to demodulate the measured voltages in the set of first coils (100) as a said second device moves relative to a said first device and switches for each coil in a said set of second coils (200) are open and closed so that the second coils (200) act as either an open circuit or closed circuit and thereby allow each coil in a said set of second coils (200) to be selectively powered, by induction from the power induced in the set of first coils (100), and to output a demodulated symbol.

8. A vehicle comprising an apparatus according to any of claims 1 to 7.

9. A method for transmitting, simultaneously and wirelessly, information and power from a first device to a second device as the first device moves relative to the second device, the method comprising:
moving a set of first coils (100) of the first device with respect to a set of second coils (200) of the second device, at least some of the coils in the set of first coils (100) having magnetic cores (104) whereby power is transferred from the first device to the second device by magnetic induction through relative movement of the magnetic cores (104) of the set of first coils (100) with respect to the set of second coils (200); and
controlling switches for each of the coils in the set of first coils (100) to be open and closed so that the first coils (100) act as either an open circuit or closed circuit and thereby selectively power the first coils (100), in order to transmit information to the set of second coils (200) by induction from the power induced in the set of second coils (200) as the set of selectively powered first coils (100) move relative to the set of second coils (200).

10. A method according to claim 9, comprising:
controlling the transmission of information to the set of second coils (200) based on the relative velocity between the set of first coils (100) and the set of second coils.

11. A method according to claim 9 or claim 10, wherein the first device is a vehicle and the set of second coils (200) is fitted adjacent to a track, and the vehicle moves along the track.

12. A method according to any of claims 9 to 11, wherein the longitudinal axes of the coils in the set of first coils (100) are parallel to the coils in the set of second coils (200).

13. A method according to any of claims 9 to 11, comprising:
measuring the induced voltage in the set of first coils (100) as the second device moves in relation to the first device;
harvesting energy in the set of first coils (100); and
demodulating the measured voltages in the set of first coils (100) as the second device moves relative to the first device and switches for each of the coils in the set of second coils (200) are open and closed so that the second coils (200) act as either an open circuit or closed circuit and thereby allow each coil in the set of second coils (200) to be selectively powered, by induction from the power induced in the set of first coils (100), to output a demodulated symbol.

14. A method according to claim 13, comprising measuring the relative velocity between the second device and first device and utilizing the measured velocity to control the selective powering of the coils in the set of first coils (100) in order to enable transmission of information to the set of second coils (200).

15. A method according to claim 13 or claim 14, wherein the first device is a track and the set of second coils (200) is fitted to a vehicle, and the vehicle moves along the track.

## Patentansprüche

1. Vorrichtung zum gleichzeitigen und drahtlosen Übertragen von Informationen und Energie von einem ersten Gerät, wenn sich das erste Gerät relativ zu einem zweiten Gerät bewegt, wobei die Vorrichtung aufweist:
einen Satz von ersten Spulen (100) zum Montieren an dem ersten Gerät zum Interagieren mit einem Satz von zweiten Spulen (200) zum Montieren an dem zweiten Gerät, wobei zumindest einige der Spulen im Satz von ersten Spulen (100) Magnetkerne (104) haben, um durch magnetische Induktion durch eine Relativbewegung der Magnetkerne (104) des Satzes von ersten Spulen (100) relativ zum Satz von zweiten Spulen (200) eine Energieübertragung an den Satz von zweiten Spulen (200) zu ermöglichen; und
eine Steuerung, ausgestaltet zum Öffnen und Schließen von Schaltern für jede Spule im Satz von ersten Spulen (100), sodass die ersten Spulen (100) entweder als offener Stromkreis oder geschlossener Stromkreis agieren und dadurch eine selektive Stromversorgung jeder Spule im Satz von ersten Spulen (100) ermöglichen, um durch Induktion vom im Satz von zweiten Spulen (200) induzierten Strom, wenn sich der Satz von selektiv stromversorgten ersten Spulen (100) relativ zum Satz von zweiten Spulen (200) bewegt, eine Übertragung von Informationen an den Satz von zweiten Spulen (200) zu ermöglichen.

2. Vorrichtung nach Anspruch 1, aufweisend:
mehrere Sätze von ersten Spulen (100) zum Montieren am ersten Gerät.

3. Vorrichtung nach Anspruch 1 oder 2, bei welcher die Längsachsen der Spulen im Satz von ersten Spulen (100) parallel zueinander sind.

4. Vorrichtung nach einem der Ansprüche 1 bis 3, aufweisend:
einen Geschwindigkeitsschätzer, ausgestaltet zum Erlangen eines Geschwindigkeitsmaßes des Satzes von ersten Spulen (100) relativ zum Satz von zweiten Spulen (200) und Bereitstellen des Geschwindigkeitsmaßes an die Steuerung.

5. Vorrichtung nach Anspruch 4, bei welcher die Steuerung ausgestaltet ist, um das Geschwindigkeitsmaß zum Steuern der selektiven Stromversorgung der Spulen im Satz von ersten Spulen (100) zu verwenden, um eine Übertragung von Informationen an den Satz von zweiten Spulen (200) zu ermöglichen.

6. Vorrichtung nach einem der Ansprüche 1 bis 5, bei welcher alle Spulen im Satz von ersten Spulen (100) Magnetkerne (104) haben.

7. Vorrichtung nach einem der Ansprüche 1 bis 6, aufweisend:
eine Messschaltung, ausgestaltet zum Messen der im Satz von ersten Spulen (100) induzierten Spannung, wenn sich das zweite Gerät relativ zum ersten Gerät bewegt;
eine Energieernteschaltung, ausgestaltet zum Ernten von Energie im Satz von ersten Spulen (100); und
einen Demodulator, ausgestaltet zum Demodulieren der gemessenen Spannungen im Satz von ersten Spulen (100), wenn sich das zweite Gerät relativ zum ersten Gerät bewegt und die Schalter für jede Spule im Satz von zweiten Spulen (200) offen und geschlossen sind, sodass die zweiten Spulen (200) entweder als offener Stromkreis oder geschlossener Stromkreis agieren und dadurch eine selektive Stromversorgung jeder Spule im Satz von zweiten Spulen (200) durch Induktion von im Satz von ersten Spulen (100) induziertem Strom ermöglichen, und Ausgeben eines demodulierten Symbols.

8. Fahrzeug mit einer Vorrichtung nach einem der Ansprüche 1 bis 7.

9. Verfahren zum gleichzeitigen und drahtlosen Übertragen von Informationen und Energie von einem ersten Gerät an ein zweites Gerät, wenn sich das erste Gerät relativ zum zweiten Gerät bewegt, wobei das Verfahren aufweist:
Bewegen eines Satzes von ersten Spulen (100) des ersten Geräts relativ zu einem Satz von zweiten Spulen (200) des zweiten Geräts, wobei zumindest einige der Spulen im Satz von ersten Spulen (100) Magnetkerne (104) haben, wodurch durch magnetische Induktion durch eine Relativbewegung der Magnetkerne (104) des Satzes von ersten Spulen (100) relativ zum Satz von zweiten Spulen (200) Energie vom ersten Gerät an das zweite Geräte übertragen wird; und
Steuern von Schaltern für jede der Spulen im Satz von ersten Spulen (100), um offen oder geschlossen zu sein, sodass die ersten Spulen (100) entweder als offener Stromkreis oder geschlossener Stromkreis agieren und dadurch die ersten Spulen (100) selektiv mit Strom versorgen, um durch Induktion aus dem im Satz von zweiten Spulen (200) induzierten Strom, wenn sich der Satz von selektiv stromversorgten ersten Spulen (100) relativ zum Satz von zweiten Spulen (200) bewegt, Informationen an den Satz von zweiten Spulen (200) zu übertragen.

10. Verfahren nach Anspruch 9, aufweisend:
Steuern der Übertragung von Informationen an den Satz von zweiten Spulen (200) basierend auf der Relativgeschwindigkeit zwischen dem Satz von ersten Spulen (100) und dem Satz von zweiten Spulen (200).

11. Verfahren nach Anspruch 9 oder 10, bei welchem das erste Gerät ein Fahrzeug ist und der Satz von zweiten Spulen (200) neben einer Spur montiert ist und sich das Fahrzeug entlang der Spur bewegt.

12. Verfahren nach einem der Ansprüche 9 bis 11, bei welchem die Längsachsen der Spulen im Satz von ersten Spulen (100) parallel zu den Spulen im Satz von zweiten Spulen (200) sind.

13. Verfahren nach einem der Ansprüche 9 bis 11, aufweisend:
Messen der induzierten Spannung im Satz von ersten Spulen (100), wenn sich das zweite Gerät relativ zum ersten Gerät bewegt;
Ernten der Energie im Satz von ersten Spulen (100); und
Demodulieren der gemessenen Spannungen im Satz von ersten Spulen (100), wenn sich das zweite Gerät relativ zum ersten Gerät bewegt und Schalter für jede der Spulen im Satz von zweiten Spulen (200) offen und geschlossen sind, sodass die zweiten Spulen (200) entweder als offener Stromkreis oder geschlossener Stromkreis agieren und dadurch eine selektive Stromversorgung jeder Spule im Satz von zweiten Spulen (200) durch Induktion aus dem im Satz von ersten Spulen (100) induzierten Strom ermöglichen, um ein demoduliertes Symbol auszugeben.

14. Verfahren nach Anspruch 13, aufweisend:
Messen der Relativgeschwindigkeit zwischen dem zweiten Gerät und dem ersten Gerät und Verwenden der gemessenen Geschwindigkeit zum Steuern der selektiven Stromversorgung der Spulen im Satz von ersten Spulen (100), um eine Übertragung von Informationen an den Satz von zweiten Spulen (200) zu ermöglichen.

15. Verfahren nach Anspruch 13 oder 14, bei welchem das erste Gerät eine Spur ist und der Satz von zweiten Spulen (200) an einem Fahrzeug montiert ist und sich das Fahrzeug entlang der Spur bewegt.

## Revendications

1. Appareil pour le transfert simultané et sans fil d'information et d'énergie à partir d'un premier dispositif lorsque le premier dispositif se déplace par rapport à un deuxième dispositif, l'appareil comprenant :
un ensemble de premières bobines (100) à disposer dans ledit premier dispositif pour interagir avec un ensemble de deuxièmes bobines (200) à disposer dans ledit deuxième dispositif, au moins certaines des bobines dans l'ensemble de premières bobines (100) ayant des noyaux magnétiques (104) pour permettre un transfert d'énergie audit ensemble de deuxièmes bobines (200) par induction magnétique grâce à un déplacement relatif des noyaux magnétiques (104) de l'ensemble de premières bobines (100) par rapport audit ensemble de deuxièmes bobines (200) ; et
un contrôleur configuré de manière à ouvrir et fermer des interrupteurs pour chaque bobine dans l'ensemble de premières bobines (100) de sorte que les premières bobines (100) agissent comme soit un circuit ouvert, soit un circuit fermé, et permettent ainsi à chaque bobine dans l'ensemble de premières bobines (100) d'être alimentée de manière sélective, afin de permettre la transmission d'information audit ensemble de deuxièmes bobines (200) par induction à partir de l'énergie induite dans ledit ensemble de deuxièmes bobines (200) lorsque l'ensemble de premières bobines (100) alimentées de manière sélective se déplace par rapport audit ensemble de deuxièmes bobines (200).

2. Appareil selon la revendication 1, comprenant :
une pluralité d'ensembles de premières bobines (100) pour s'adapter audit premier dispositif.

3. Appareil selon la revendication 1 ou 2, dans lequel les axes longitudinaux des bobines dans l'ensemble de premières bobines (100) sont parallèles les uns aux autres.

4. Appareil selon l'une quelconque des revendications 1 à 3, comprenant un estimateur de vitesse configuré de manière à obtenir une mesure d'une vitesse de l'ensemble de premières bobines (100) par rapport audit ensemble de deuxièmes bobines (200), et configuré de manière à fournir la mesure de la vitesse au contrôleur.

5. Appareil selon la revendication 4, dans lequel le contrôleur est configuré de manière à utiliser la mesure de vitesse pour contrôler l'alimentation sélective des bobines dans l'ensemble de premières bobines (100) afin de permettre la transmission d'information audit ensemble de deuxièmes bobines (200).

6. Appareil selon l'une quelconque des revendications 1 à 5, dans lequel toutes les bobines dans l'ensemble de premières bobines (100) ont des noyaux magnétiques (104).

7. Appareil selon l'une quelconque des revendications 1 à 6, comprenant :
un circuit de mesure configuré de manière à mesurer la tension induite dans l'ensemble de premières bobines (100) lorsque ledit deuxième dispositif se déplace par rapport audit premier dispositif ;
un circuit de récupération d'énergie configuré de manière à récupérer de l'énergie dans le premier ensemble de premières bobines (100) ; et
un démodulateur configuré de manière à démoduler les tensions mesurées dans l'ensemble de premières bobines (100) lorsque ledit deuxième dispositif se déplace par rapport audit premier dispositif et lesdits interrupteurs pour chaque bobine dans ledit ensemble de deuxièmes bobines (200) sont ouverts et fermés, de sorte que les deuxièmes bobines (200) agissent comme soit un circuit ouvert, soit un circuit fermé, et permettent ainsi à chaque bobine dans ledit ensemble de deuxièmes bobines (200) d'être alimentée de manière sélective par induction à partir de l'énergie induite dans l'ensemble de premières bobines (100), et configuré de manière à délivrer en sortie un symbole démodulé.

8. Véhicule comprenant un appareil selon l'une quelconque des revendications 1 à 7.

9. Procédé de transmission simultanée et sans fil d'information et d'énergie d'un premier dispositif à un deuxième dispositif lorsque le premier dispositif se déplace par rapport au deuxième dispositif, le procédé comprenant les étapes consistant à :
déplacer un ensemble de premières bobines (100) du premier dispositif par rapport à un ensemble de deuxièmes bobines (200) du deuxième dispositif, au moins certaines des bobines dans l'ensemble de premières bobines (100) ayant des noyaux magnétiques (104) permettant à de l'énergie d'être transférée du premier dispositif au deuxième dispositif par induction magnétique grâce à un déplacement relatif des noyaux magnétiques (104) de l'ensemble de premières bobines (100) par rapport à l'ensemble de deuxièmes bobines (200) ; et
contrôler que des interrupteurs pour chacune de bobines dans l'ensemble de premières bobines (100) soient ouverts et fermés de sorte que les premières bobines (100) agissent comme soit un circuit ouvert, soit un circuit fermé, et alimentent ainsi de manière sélective les premières bobines (100), afin de transmettre de l'information à l'ensemble de deuxièmes bobines (200) par induction à partir de l'énergie induite dans l'ensemble de deuxièmes bobines (200) lorsque l'ensemble de premières bobines (100) alimentées de manière sélective se déplace par rapport à l'ensemble de deuxièmes bobines (200).

10. Procédé selon la revendication 9, comprenant l'étape consistant à :
contrôler la transmission d'information à l'ensemble de deuxièmes bobines (200) sur la base de la vitesse relative entre l'ensemble de premières bobines (100) et l'ensemble de deuxièmes bobines.

11. Procédé selon la revendication 9 ou 10, dans lequel le premier dispositif est un véhicule et l'ensemble de deuxièmes bobines (200) est disposé adjacent à une piste, et dans lequel le véhicule se déplace le long de la piste.

12. Procédé selon l'une quelconque des revendications 9 à 11, dans lequel les axes longitudinaux des bobines dans l'ensemble de premières bobines (100) sont parallèles aux bobines dans l'ensemble de deuxièmes bobines (200).

13. Procédé selon l'une quelconque des revendications 9 à 11, comprenant les étapes consistant à :
mesurer la tension induite dans l'ensemble de premières bobines (100) lorsque le deuxième dispositif se déplace par rapport au premier dispositif ;
récupérer de l'énergie dans le premier ensemble de premières bobines (100) ; et
démoduler les tensions mesurées dans l'ensemble de premières bobines (100) lorsque le deuxième dispositif se déplace par rapport au premier dispositif et les interrupteurs pour chacune des bobines dans l'ensemble de deuxièmes bobines (200) sont ouverts et fermés de sorte que les deuxièmes bobines (200) agissent comme soit un circuit ouvert, soit un circuit fermé, et permettent ainsi à chaque bobine dans l'ensemble de deuxièmes bobines (200) d'être alimentée de manière sélective par induction à partir de l'énergie induite dans l'ensemble de premières bobines (100), pour délivrer en sortie un symbole démodulé.

14. Procédé selon la revendication 13, comprenant les étapes consistant à mesurer la vitesse relative entre le deuxième dispositif et le premier dispositif, et à utiliser la vitesse mesurée pour contrôler l'alimentation sélective des bobines dans l'ensemble des premières bobines (100), afin de permettre une transmission d'information à l'ensemble de deuxièmes bobines (200).

15. Procédé selon la revendication 13 ou 14, dans lequel le premier dispositif est une piste et l'ensemble de deuxièmes bobines (200) est disposé dans un véhicule, et dans lequel le véhicule se déplace le long de la piste.
